# EUROPEAN PATENT APPLICATION

(11) **EP 4 336 376 A1**
(43) Date of publication of application: **13.03.2024**
(21) Application number: 22890161.7
(22) Date of filing: 14.09.2022
(51) Int. Cl.: G06F 16/2452, G06F 16/2455, G06F 16/33, G06F 16/903, G06F 40/30, G06F 40/205

(54) **ELECTRONIC DEVICE AND METHOD FOR PROVIDING SEARCH RESULT RELATED TO QUERY STATEMENT**

(30) Priority: 04.11.2021 KR 20210150856
(71) Applicant: Samsung Electronics Co., Ltd., Suwon-si, Gyeonggi-do 16677 (KR)
(72) Inventor: LEE, Kangwook, Suwon-si, Gyeonggi-do 16677 (KR)
(74) Representative: Appleyard Lees IP LLP
(86) International application number: PCT/KR2022/013696
(87) International publication number: WO 2023/080425

(57) **Abstract**

An electronic device and a method for providing a search result related to a query statement are provided. The electronic device acquires at least one semantic syntax, at least one conditional syntax, and relationship information between at least two of the at least one semantic syntax and the at least one conditional syntax by parsing a query statement. The electronic device converts the at least one semantic syntax into at least one first embedding vector. The electronic device acquires, as a first search result, data to be searched for, corresponding to a second embedding vector that is similar to the at least one first embedding vector. The electronic device acquires, as a second search result, data to be searched for, including metadata corresponding to the at least one conditional syntax, and determines, from the first search result and the second search result on the basis of the relationship information, a search result to be provided to a user.

## Description

### TECHNICAL FIELD

The disclosure relates to an electronic device and method for providing a search result related to a query sentence.

### BACKGROUND ART

As network and natural language interpretation technology develops, a search service for various query sentences through various devices is provided to users. Complex query sentences have various meanings. According to an embedding vector-based neural network search technology using an artificial intelligence (AI) model, it is difficult to provide an accurate search as the number of meanings of in a query sentence is high. It is also difficult to provide a search result in consideration of a logical relationship between the category of the query sentence and the meanings within the query sentence.

### DESCRIPTION OF EMBODIMENTS

### SOLUTION TO PROBLEM

In accordance with an embodiment of the disclosure, a method, performed by an electronic device, of providing a search result related to a query sentence is provided. The method includes obtaining the query sentence related to an inquiry of a user. The method includes obtaining, by parsing the query sentence, at least one semantic phrase representing a meaning of a search related to the query sentence, at least one conditional phrase representing the condition of the search related to the query sentence, and relationship information between at least two of the at least one semantic phrase and the at least one conditional phrase. The method includes converting the at least one semantic phrase into at least one first embedding vector. The method includes comparing the at least one first embedding vector with a second embedding vector indexed to search target data stored in the electronic device. The method includes obtaining, as a first search result, search target data indexed by the second embedding vector similar to the first embedding vector by a predetermined threshold value or greater, based on a result of the comparing of the at least one first embedding vector with the second embedding vector. The method includes comparing the at least one conditional phrase with metadata of the search target data stored in the electronic device. The method includes obtaining, as a second search result, search target data including metadata corresponding to the at least one conditional phrase, based on a result of the comparing of the at least one conditional phrase with the metadata. The method includes determining, based on the relationship information, a search result that is to be provided to the user from the first search result and the second search result. The method includes providing the determined search result to the user.

In accordance with an embodiment of the disclosure, an electronic device is provided. The electronic device includes a communication interface, a memory, and a processor. The memory stores instructions for a search related to a query sentence. The processor is configured to obtain the query sentence related to an inquiry of a user by executing the instructions stored in the memory. The processor is configured to obtain, by parsing the query sentence, at least one semantic phrase representing a meaning of a search related to the query sentence, at least one conditional phrase representing the condition of the search related to the query sentence, and relationship information between at least two of the at least one semantic phrase and the at least one conditional phrase. The processor is configured to convert the at least one semantic phrase into at least one first embedding vector. The processor is configured to compare the at least one first embedding vector with a second embedding vector indexed to search target data stored in the electronic device. The processor is configured to obtain, as a first search result, search target data to which the second embedding vector similar to the first embedding vector by a predetermined threshold value or greater has been indexed, based on a result of the comparison of the at least one first embedding vector with the second embedding vector. The processor is configured to compare the at least one conditional phrase with metadata of the search target data stored in the electronic device. The processor is configured to obtain, as a second search result, search target data including metadata corresponding to the at least one conditional phrase, based on a result of the comparison of the at least one conditional phrase with the metadata. The processor is configured to determine, based on the relationship information, a search result that is to be provided to the user from the first search result and the second search result. The processor is configured to provide the determined search result to the user.

According to an embodiment of the disclosure, a computer-readable recording medium has recorded thereon a computer program for performing the above-described method.

### BRIEF DESCRIPTION OF DRAWINGS

FIG. 1 is a schematic diagram illustrating an example in which an electronic device determines a search result related to a query sentence according to an embodiment of the disclosure;
FIG. 2 is a block diagram of an electronic device according to an embodiment of the disclosure;
FIG. 3 is a schematic diagram illustrating a process in which an electronic device ; indexes the second embedding vector to the search target data according to an embodiment of the disclosure;
FIG. 4 is a schematic diagram illustrating a process in which an electronic device provides a search result according to an embodiment of the disclosure;
FIG. 5 is a flowchart of a method, performed by an electronic device, of providing a search result related to a query sentence, according to an embodiment of the disclosure;
FIG. 6 is a flowchart of a method, performed by an electronic device, of creating an index DB, according to an embodiment of the disclosure;
FIG. 7 is a schematic diagram illustrating a method, performed by an electronic device, of providing a search result related to a memo according to an embodiment of the disclosure;
FIG. 8 is a schematic diagram illustrating a method, performed by an electronic device, of providing a search result related to a picture according to an embodiment of the disclosure;
FIG. 9 is a schematic diagram illustrating a method, performed by an electronic device, of providing a search result related to mobile phone setting according to an embodiment of the disclosure;
FIG. 10 is a flowchart of a method, performed by an electronic device, of determining a search result related to a query sentence, according to an embodiment of the disclosure; and
FIG. 11 is a block diagram of an electronic device according to an embodiment of the disclosure.

### MODE OF DISCLOSURE

The following description with reference to the accompanying drawings is provided to assist in a comprehensive understanding of various embodiments of the disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

Throughout the specification, when an element is referred to as being "connected" or "coupled" to another element, it can be directly connected or coupled to the other element, or can be electrically connected or coupled to the other element with intervening elements interposed therebetween. In addition, the terms "comprises" and/or "comprising" or "includes" and/or "including" when used in this specification, specify the presence of stated elements, but do not preclude the presence or addition of one or more other elements.

An embodiment of the disclosure is to provide an electronic device and method for providing a search result related to a query sentence by using a semantic phrase and a conditional phrase obtained from the query sentence.

Also, an embodiment of the disclosure is to provide an electronic device and method for determining a search result related to a query sentence in consideration of a first search result based on an embedding vector generated from a semantic phrase and a second search result found based on a comparison between a conditional phrase and meta data.

Also, an embodiment of the disclosure is to provide an electronic device and method for determining a search result related to a query sentence from a first search result based on an embedding vector generated from a semantic phrase and a second search result found based on a comparison between a conditional phrase and meta data, based on relationship information obtained from a query sentence.

Herein, a semantic phrase obtained from a query sentence is a phrase created by analyzing a query sentence, and may be created by parsing the query sentence into meaning representations, based on semantic parsing, and may indicate the meaning of a search related to the query sentence.

Herein, a conditional phrase obtained from a query sentence is a phrase created by analyzing a query sentence, and may be created by parsing the query sentence into meaning representations, based on semantic parsing, and may be a phrase indicating the conditions of a search related to the query sentence.

Herein, relationship information obtained from the query sentence may be created by parsing the query sentence into meaning representations based on semantic parsing, and may be information indicating a logical relationship between at least two of at least one semantic phrase and at least one conditional phrase.

Herein, an embedding vector may be a vector representing a natural language in the form of a number that a computer can understand. The embedding vector may be a latent vector or a latent factor, and the embedding vector may represent only a mathematical value. As cosine similarity between embedding vectors is higher, the meanings of natural languages represented by the embedding vectors may be identified as being similar to each other.

Herein, a first embedding vector may be an embedding vector converted from a semantic phrase, and may be used to search for search-target data related to the semantic phrase.

Herein, a second embedding vector may be an embedding vector indexed into the search-target data, and may be compared with the first embedding vector in order to search for a meaning related to the query sentence.

Herein, the search-target data is data that is related to the query sentence and is to be searched, and may include, for example, data related to device settings, data related to a memo input by a user, and content created by the user. For example, the memo input by the user may include a text memo and a voice memo, and the content created by the user may include a photo and a video.

The disclosure will now be described more fully with reference to the accompanying drawings.

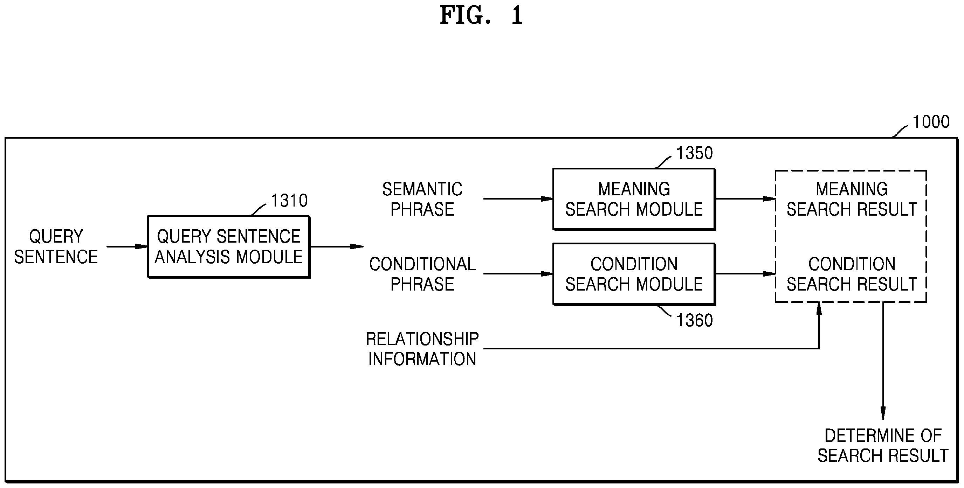

FIG. 1 is a schematic diagram illustrating an example in which an electronic device determines a search result related to a query sentence according to an embodiment of the disclosure.

Referring to FIG. 1, an electronic device 1000 may obtain a semantic phrase, a conditional phrase, and relationship information related to the query sentence by analyzing the query sentence, and may obtain a meaning search result based on the semantic phrase and a condition search result based on the conditional phrase. The electronic device 1000 may determine a search result to be provided to a user from the meaning search result and the condition search result, based on relationship information between the semantic phrase and the conditional phrase.

The electronic device 1000 may obtain logical representations such as the semantic phrase, the conditional phrase, and the relationship information from the query sentence, by analyzing the query sentence using a query sentence analysis module 1310, which will be described later. The electronic device 1000 may obtain the meaning search result based on the semantic phrase as a first search result by using a meaning search module 1350, which will be described later, and may obtain the condition search result based on the conditional phrase as a second search result by using a condition search module 1360, which will be described later. The electronic device 1000 may search for the meaning search result by comparing a first embedding vector created from the semantic phrase with a second embedding vector indexed to search target data. The electronic device 1000 may search for the condition search result by comparing the conditional phrase with metadata of the search target data. The electronic device 1000 may determine a search result to be provided to the user from the first search result and the second search result, in consideration of a logical relationship between the semantic phrase and the conditional phrase.

Examples of the electronic device 1000 may include, but are not limited to, a smartphone, a tablet personal computer (PC), a PC, a smart television (TV), a mobile phone, a personal digital assistant (PDA), a laptop, a media player, a micro-server, a global positioning system (GPS) device, an electronic book terminal, a digital broadcasting terminal, a navigation device, a kiosk, an MP3 player, a digital camera, home appliances, and other mobile or non-mobile computing devices. The electronic device 1000 may be a server device. The electronic device 1000 may also be a wearable device, such as a watch, glasses, a hair band, or a ring each having a communication function and a data processing function. However, embodiments of the disclosure are not limited thereto, and the electronic device 1000 may be any kind of apparatus capable of processing data for query sentence search via a network.

The network may include a combination of at least two of a local area network (LAN), a wide area network (WAN), a value added network (VAN), a mobile radio communication network, or a satellite communication network, and is a data communication network in a comprehensive sense that allows network constituents to communicate smoothly with each other, and includes a wired Internet, a wireless Internet, and a mobile wireless communication network. Examples of wireless communication may include, but are not limited to, Wi-Fi, Bluetooth, Bluetooth low energy (BLE), ZigBee, Wi-Fi Direct (WFD), ultra wideband (UWB), infrared Data Association (IrDA), and Near Field Communication (NFC).

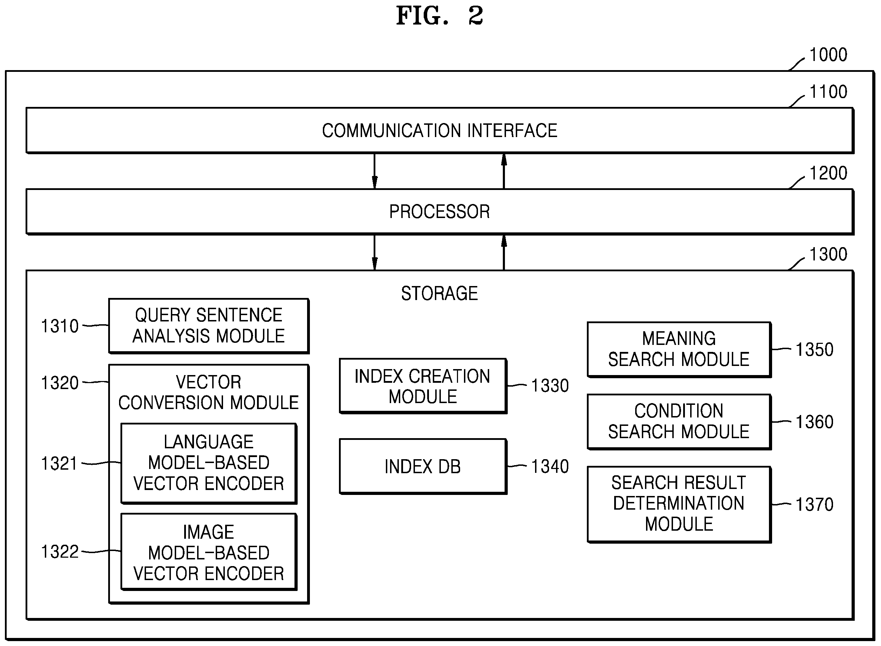

FIG. 2 is a block diagram of the electronic device 1000 according to an embodiment of the disclosure.

Referring to FIG. 2, the electronic device 1000 includes a communication interface 1100, a processor 1200, and a storage 1300.

The communication interface 1100 transmits/receives the data for query sentence search to/from an external device (not shown). The communication interface 1100 may include at least one component that enables communication between the electronic device 1000 and an external device (not shown). For example, the communication interface 1100 may include at least one of a short-range wireless communication interface, a mobile communication interface, or a broadcasting receiver. The short-range wireless communication interface may include, but is not limited to, a Bluetooth communication interface, a BLE communication interface, a NFC interface, a WLAN (Wi-Fi) communication interface, a Zigbee communication interface, an IrDA communication interface, a WFD communication interface, a UWB communication interface, or an Ant+ communication interface. The mobile communication interface transmits or receives a wireless signal to or from at least one of a base station, an external terminal, or a server on a mobile communication network. Examples of the wireless signal may include a voice call signal, a video call signal, or various types of data according to text/multimedia message exchange. The broadcast receiver receives a broadcast signal and/or broadcast-related information from an external source through a broadcast channel. The broadcast channel may include a satellite channel or/and a terrestrial channel.

The storage 1300 stores the data for query sentence search. The storage 1300 may store a program for processing and control by the processor 1200, or may store data obtained for query sentence search.

The storage 1300 may include at least one an internal memory (not shown) or/and an external memory (not shown). The internal memory may include at least one selected from volatile memory (e.g., dynamic RAM (DRAM), static RAM (SRAM), or synchronous dynamic RAM (SDRAM)), non-volatile memory (e.g., one time programmable ROM (OTPROM), programmable ROM (PROM), erasable and programmable ROM (EPROM), electrically erasable and programmable ROM (EEPROM), mask ROM, or flash ROM), a hard disk drive (HDD), or a solid state drive (SSD). According to an embodiment of the disclosure, the processor 1200 may load a command or data received from at least one of the non-volatile memory or another element into the volatile memory and process the command or the data. The processor 1200 may store data received or generated from another element in the non-volatile memory. The external memory may include, for example, at least one selected from Compact Flash (CF), Secure Digital (SD), Micro-SD, Mini-SD, extreme Digital (xD) or/and Memory Stick.

The programs stored in the storage 1300 may be classified into a plurality of modules according to their functions, such as a query sentence analysis module 1310, a vector conversion module 1320, an index creation module 1330, an index DB 1340, a meaning search module 1350, a condition search module 1360, and a search result determination module 1370.

The processor 1200 controls all operations of the electronic device 1000. For example, the processor 1200 may entirely control the communication interface 1100 and the storage 1300 by executing the programs stored in the storage 1300. The processor 1200 may provide a search result related to the query sentence to the user by executing the query sentence analysis module 1310, the vector conversion module 1320, the index creation module 1330, the index DB 1340, the meaning search module 1350, the condition search module 1360, and the search result determination module 1370 stored in the storage 1300.

The processor 1200 analyzes the meaning of the query sentence by executing the query sentence analysis module 1310. The query sentence analysis module 1310 may parse the query sentence into meaning representations, based on semantic parsing. The query sentence analysis module 1310 may obtain at least one semantic phrase representing the meaning of the search related to the query sentence, at least one conditional phrase representing the condition of the search related to the query sentence, and relationship information representing a logical relationship between at least two of the at least one semantic phrase and the at least one conditional phrase. The query sentence may be a natural language sentence input to the electronic device 1000. For example, when the electronic device 1000 is a device of the user, the electronic device 1000 may obtain a query sentence input by the user. For example, when the electronic device 1000 is a server, the electronic device 1000 may receive a query sentence from the device of the user. The conditional phrase may represent, for example, a file format, a category, and a writing date of the search target data, and the relationship information may represent, for example, a relationship between phrases, like 'AND', 'OR', and 'NOR'.

When the query sentence is "Setting that reduces eye fatigue without making the screen yellowish", the query sentence analysis module 1310 may parse the query sentence into a semantic phrase ("without making the screen yellowish") and a semantic phrase ("setting that reduces eye fatigue"), and may output a relationship "AND" between the semantic phrase ("without making the screen yellowish") and the semantic phrase ("setting that reduces eye fatigue").

When the query sentence is "Chinese recipe written on May 14^{th}", the query sentence analysis module 1310 may parse the query sentence into a semantic phrase ("Chinese recipe") and a conditional phrase ("May 14^{th}"), and may output a relationship "AND" between the semantic phrase ("Chinese recipe") and the conditional phrase ("May 14^{th}").

When the query sentence is "a photo where I played baseball with my son in the park", the query sentence analysis module 1310 may parse into a conditional phrase ("park"), a conditional phrase ("photo"), and a semantic phrase ("baseball with my son"), and may output a relationship "AND" between the conditional phrase("park"), the conditional phrase ("photo"), and the semantic phrase ("baseball with my son").

The vector conversion module 1320 may convert text into an embedding vector. The embedding vector may be a vector representing a natural language in the form of a number that a computer can understand. The embedding vector may be a latent vector or a latent factor, and the embedding vector may represent only a mathematical value. As cosine similarity between embedding vectors is higher, the electronic device 1000 may identify the meanings of natural languages represented by the embedding vectors as being similar to each other. A dimension of the embedding vector may be determined in consideration of, for example, a resource of the electronic device 1000 and the time required to provide a search result. For example, when a memory of the electronic device 1000 increases, the dimension of the embedding vector may also increase.

The vector conversion module 1320 may include a language model-based vector encoder 1321. The language model-based vector encoder 1321 may be trained so that embedding vectors converted from texts having similar meanings have similar values. The language model-based vector encoder 1321 may be trained so that, as the meanings of the texts are similar to each other, the cosine similarity of the embedding vectors converted from the texts increase.

The vector conversion module 1320 may include an image model-based vector encoder 1322. The image model-based vector encoder 1322 may be trained so that embedding vectors converted from images of photographed similar situations have similar values. For example, the image model-based vector encoder 1322 may be trained so that, as the situations represented by the images become similar to each other, cosine similarity between the embedding vectors converted from the images increases.

The processor 1200 converts the semantic phrase into which the query sentence is parsed into the first embedding vector, by executing the vector conversion module 1320. The first embedding vector may be a vector used to search for the search-target data related to the semantic phrase. The processor 1200 may preprocess the semantic phrase into a format processable by the vector conversion module 1320 so that the semantic phrase into which the query sentence is parsed may be input to the vector conversion module 1320. The processor 1200 may preprocess the semantic phrase into which the query sentence is parsed, so that the semantic phrase into which the query sentence is parsed has the format of an input value of the language model-based vector encoder 1321. The processor 1200 may input the preprocessed semantic phrase to the vector conversion module 1320, and may obtain the first embedding vector output from the vector conversion module 1320. When the query sentence is parsed into a plurality of semantic phrases, the vector conversion module 1320 may convert each of the plurality of semantic phrases into the first embedding vector.

The processor 1200 may create the second embedding vector for the search target data by executing the vector conversion module 1320. The search-target data is data that is related to the query sentence and is to be search-targeted, and may include, for example, data related to device settings, data related to a memo input by a user, and content created by the user. For example, the memo input by the user may include a text memo and a voice memo, and the content created by the user may include a photo and a video. The second embedding vector may be a vector that is indexed to the search target data. For example, when the search target data is text, the processor 1200 may input the text to the language model-based vector encoder 1321, and may obtain the second embedding vector from the language model-based vector encoder 1321. For example, when the search target data is an image, the processor 1200 may input text describing the image to the vector conversion module 1320, and may obtain the second embedding vector output from the vector conversion module 1320. In this case, the processor 1200 may input the image to a trained artificial intelligence (AI) model (not shown) in order to analyze a situation represented by the image, and may obtain text describing the image output from the trained AI model. Alternatively, for example, when the search target data is an image, the processor 1200 may input the image to the image model-based vector encoder 1322, and may obtain the second embedding vector output from the image model-based vector encoder 1322.

The processor 1200 may index the second embedding vector to the search target data by executing the index creation module 1330. The processor 1200 may index, to the search target data, the second embedding vector that is output by the vector conversion module 1320 receiving the search target data. The processor 1200 may store the second embedding vector corresponding to the search target data in the index DB 1340. The processor 1200 may store, in the index DB 1340, the search target data to which the second embedding vector output from the vector conversion module 1320 has been indexed.

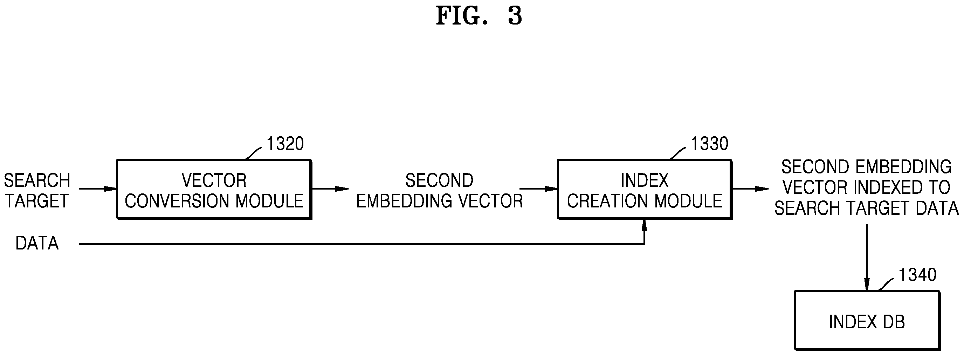

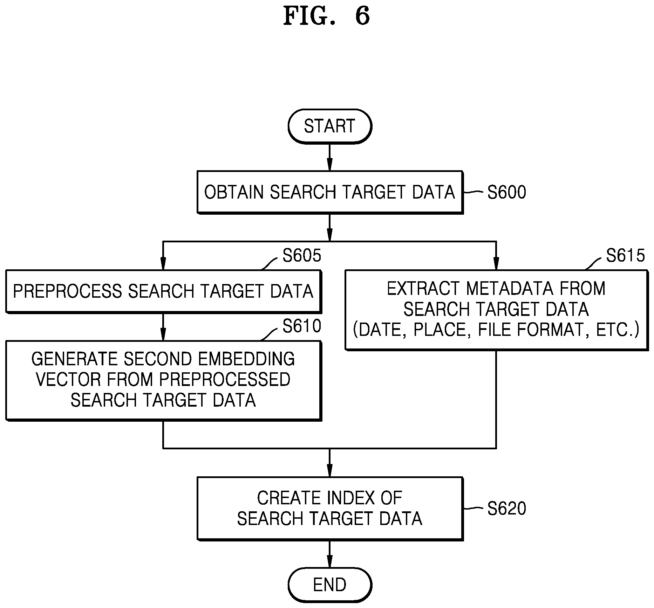

A process in which the processor 1200 indexes the second embedding vector to the search target data and stores the second embedding vector by using the vector conversion module 1320, the index creation module 1330, and the index DB 1340 will be described in more detail below with reference to FIGS. 3 and 6.

The processor 1200 searches for the search target data corresponding to the second embedding vector similar to the first embedding vector by executing the meaning search module 1350. The meaning search module 1350 may compare the first embedding vector created from the query sentence with the second embedding vector stored in the index DB 1340 to thereby search for the second embedding vector similar to the first embedding vector, based on cosine similarity between the first embedding vector and the second embedding vector. The processor 1200 may obtain, as the first search result, the search target data to which the second embedding vector similar to the first embedding vector has been indexed.

The processor 1200 searches for the search target data having metadata corresponding to the conditional phrase obtained from the query sentence, by executing the condition search module 1360. The processor 1200 may preprocess the conditional phrase parsed from the query sentence, into a format processable by the condition search module 1360. The processor 1200 may preprocess the conditional phrase parsed from the query sentence, so that the conditional phrase has the format of an input value of the condition search module 1360. The processor 1200 may input the preprocessed conditional phrase to the condition search module 1360. The condition search module 1360 may obtain the search target data having the metadata corresponding to the conditional phrase as the second search result, by comparing the preprocessed conditional phrase with metadata of the search target data.

The processor 1200 determines a search result that is to be provided to the user, from the first search result and the second search result, by executing the search result determination module 1370. The search result determination module 1370 may select the search result that is to be provided to the user, from the first search result and the second search result, based on the relationship information obtained from the query sentence.

When the query sentence is parsed into the semantic phrase and the conditional phrase and a relationship between the semantic phrase and the conditional phrase is "AND", the search result determination module 1370 may determine a search result for the query sentence based on an intersection between the first search result corresponding to the semantic phrase and the second search result corresponding to the conditional phrase.

When the semantic phrase and the conditional phrase are parsed from the query sentence and a relationship between the semantic phrase and the conditional phrase is "OR", the search result determination module 1370 may determine a search result for the query sentence based on a union between the first search result corresponding to the semantic phrase and the second search result corresponding to the conditional phrase.

When a first semantic phrase and a second semantic phrase are parsed from the query sentence and a relationship between the first and second semantic phrases is "NOT", the search result determination module 1370 may determine the search result for the query sentence by excluding a first search result corresponding to the first semantic phrase from a first search result corresponding to the second semantic phrase.

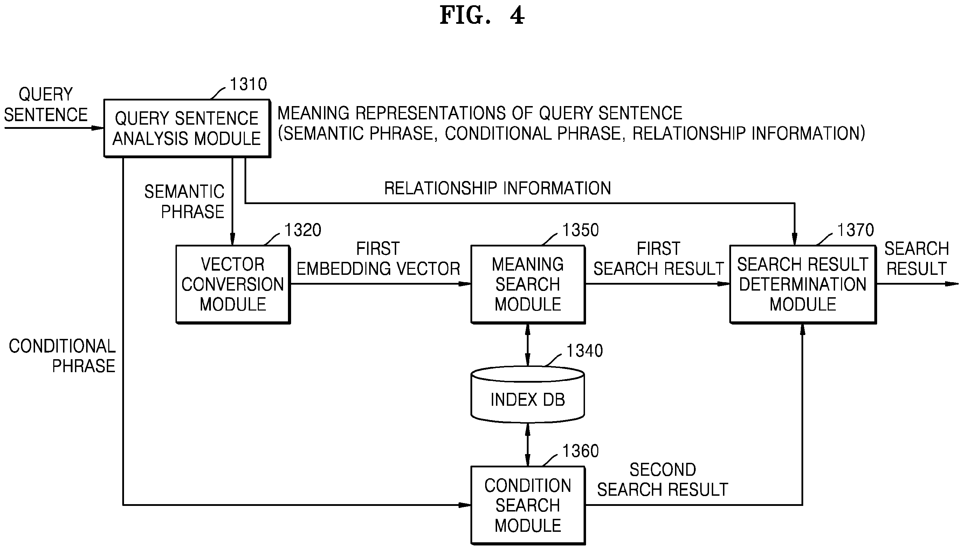

A process in which the processor 1200 determines the search result that is to be provided to the user, by using the query sentence analysis module 1310, the vector conversion module 1320, the meaning search module 1350, the condition search module 1360, and the search result determination module 1370 will be described in more detail below with reference to FIGS. 4, 5, and 7 through 9.

FIG. 3 is a schematic diagram illustrating a process in which an electronic device indexes the second embedding vector to the search target data according to an embodiment of the disclosure.

Referring to FIG. 3, the vector conversion module 1320 of the electronic device 1000 may receive the search target data and create the second embedding vector from the search target data. The index generation module 1330 of the electronic device 1000 may then index, to the search target data, the second embedding vector that is output by the vector conversion module 1320. The index DB 1340 may store the second embedding vector of the search target data. The index DB 1340 may store the search target data to which the second embedding vector has been indexed.

FIG. 4 is a schematic diagram illustrating a process in which an electronic device provides a search result according to an embodiment of the disclosure.

Referring to FIG. 4, the query sentence analysis module 1310 of the electronic device 1000 may receive the query sentence and may analyze the meaning of the query sentence. The query sentence analysis module 1310 may obtain, based on semantic parsing, at least one semantic phrase representing the meaning of the search related to the query sentence, at least one conditional phrase representing the condition of the search related to the query sentence, and relationship information representing a logical relationship between the at least two of at least one semantic phrase and the at least one conditional phrase. The semantic phrase output by the query sentence analysis module 1310 may be provided to the vector conversion module 1320, the conditional phrase output by the query sentence analysis module 1310 may be provided to the condition search module 1360, and the relationship information output by the query sentence analysis module 1310 may be provided to the search result determination module 1370.

The vector conversion module 1320 of the electronic device 1000 may receive the semantic phrase and may create the first embedding vector from the semantic phrase. The first embedding vector created by the vector conversion module 1320 may be provided to the meaning search module 1350.

The meaning search module 1350 may receive the first embedding vector, and may extract, from the index DB 1340, the search target data to which the second embedding vector similar to the first embedding vector has been indexed. The meaning search module 1350 may search for the second embedding vector similar to the first embedding vector from the index DB 1340. The second embedding vector similar to the first embedding vector may be an embedding vector having a higher cosine similarity than a threshold value from the first embedding vector. The meaning search module 1350 may output, as the first search result, the search target data corresponding to the second embedding vector similar to the first embedding vector, and the first search result may be provided to the search result determination module 1370.

The condition search module 1360 may receive the conditional phrase, and may extract from the index DB 1340 the search target data having the metadata corresponding to the conditional phrase. The condition search module 1360 may search for the search target data having the metadata corresponding to the conditional phrase from the index DB 1340, by comparing the conditional phrase with metadata of the search target data. The condition search module 1360 may output as the second search result the search target data having the metadata corresponding to the conditional phrase, and the second search result may be provided to the search result determination module 1370.

The search result determination module 1370 may determine the search result that is to be provided to the user, from the first search result and the second search result, based on the relationship information. The search result determination module 1370 may select at least one of the first search result or the second search result, based on a logical relationship between the first search result and the second search result, based on the relationship information. The search result selected by the search result determination module 1370 may be provided to the user.

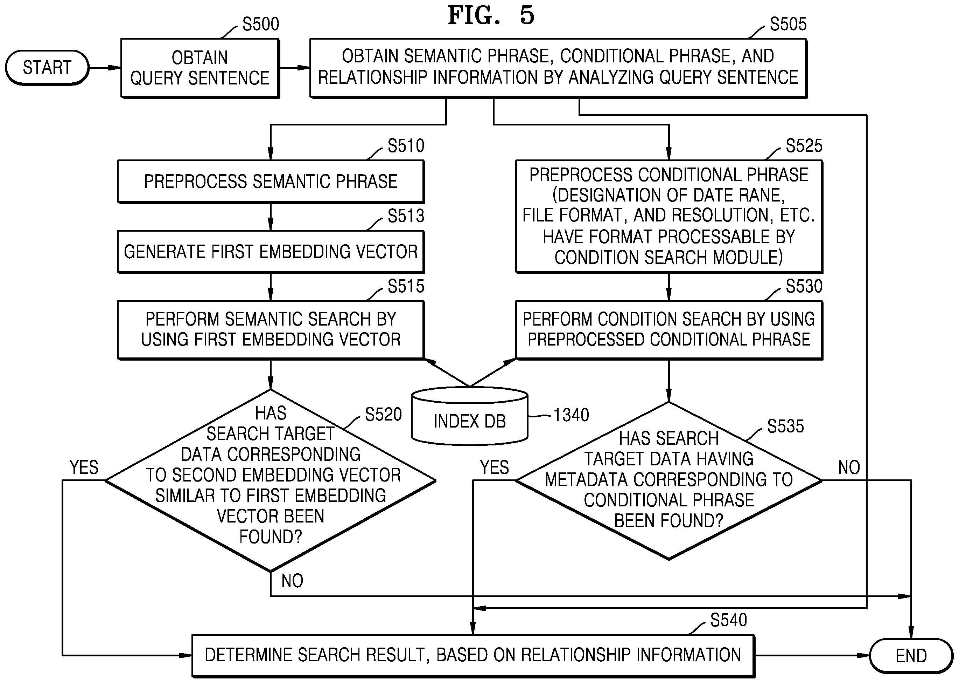

FIG. 5 is a flowchart of a method, performed by an electronic device, of providing a search result related to a query sentence, according to an embodiment of the disclosure.

In operation S500, the electronic device 1000 obtains the query sentence. When the electronic device 1000 is a device of a user, the electronic device 1000 may obtain a query sentence input by the user. When the electronic device 1000 is a server, the electronic device 1000 may receive the query sentence from a device of the user.

In operation S505, the electronic device 1000 obtains a semantic phrase, a conditional phrase, and relationship information from the query sentence by analyzing the query sentence. The electronic device 1000 may parse the query sentence into meaning representations, based on semantic parsing. The electronic device 1000 may obtain at least one semantic phrase representing the meaning of the search related to the query sentence, at least one conditional phrase representing the condition of the search related to the query sentence, and relationship information representing a logical relationship between at least two of the at least one semantic phrase and the at least one conditional phrase.

In operation S510, the electronic device 1000 preprocesses the semantic phrase obtained from the query sentence. The electronic device 1000 may preprocess the semantic phrase parsed from the query sentence into a format processable by the vector conversion module 1320. The electronic device 1000 may preprocess the semantic phrase parsed from the query sentence, so that the semantic phrase parsed from the query sentence has the format of an input value of the language model-based vector encoder 1321.

In operation S513, the electronic device 1000 may input the semantic phrase preprocessed in operation S510 to the vector conversion module 1320, and generate a first embedding vector from the vector conversion module 1320. For example, the electronic device 1000 may obtain the first embedding vector output from the vector conversion module 1320 by inputting the preprocessed semantic phrase to the vector conversion module 1320.

In operation S515, the electronic device 1000 performs a semantic search by using the first embedding vector. The electronic device 1000 may search for the second embedding vector similar to the first embedding vector from the index DB 1340. The electronic device 1000 may obtain the search target data to which the second embedding vector similar to the first embedding vector has been indexed. The electronic device 1000 may determine whether the first embedding vector and the second embedding vector are similar to each other, based on the cosine similarity between the first embedding vector and the second embedding vector. When the cosine similarity between the first embedding vector and the second embedding vector is equal to or greater than a predetermined threshold value, the electronic device 1000 may determine that the first embedding vector and the second embedding vector are similar to each other. The electronic device 1000 may search for the second embedding vector similar to the first embedding vector, and may obtain the search target data corresponding to the found second embedding vector.

In operation S520, the electronic device 1000 determines whether the search target data corresponding to the second embedding vector similar to the first embedding vector has been found. The electronic device 1000 may determine whether the search target data corresponding to the second embedding vector determined based on the cosine similarity between the first embedding vector and the second embedding vector has been found. When it is determined in operation S520 that the search target data corresponding to the second embedding vector similar to the first embedding vector has been found, the electronic device 1000 may determine the search target data corresponding to the second embedding vector similar to the first embedding vector as the first search result and perform operation S540. When it is determined in operation S520 that the search target data corresponding to the second embedding vector similar to the first embedding vector has not been found, the electronic device 1000 may conclude the search related to the query sentence.

In operation S525, the electronic device 1000 preprocesses the conditional phrase obtained from the query sentence. The electronic device 1000 may preprocess the conditional phrase parsed from the query sentence, into a format processable by the condition search module 1360. The electronic device 1000 may preprocess the conditional phrase parsed from the query sentence, so that the conditional phrase has the format of an input value of the condition search module 1360.

In operation S530, the electronic device 1000 may perform a condition search by using the preprocessed conditional phrase. The electronic device 1000 may search for the search target data having the metadata corresponding to the conditional phrase by comparing the preprocessed conditional phrase with metadata of the search target data.

In operation S535, the electronic device 1000 determines whether the search target data having the metadata corresponding to the conditional phrase has been found. When it is determined in operation S535 that the search target data having the metadata corresponding to the conditional phrase has been found, the electronic device 1000 may determine the search target data having the metadata corresponding to the conditional phrase as the second search result and may perform operation S540. When it is determined in operation S535 that the search target data having the metadata corresponding to the conditional phrase has not been found, the electronic device 1000 may conclude the search related to the query sentence. When it is determined in operation S535 that the search target data having the metadata corresponding to the conditional phrase has not been found, the electronic device 1000 may perform operation S540 without the second search result.

In operation S540, the electronic device 1000 determines the search result, based on the relationship information. The electronic device 1000 may select at least one of the first search result or the second search result, based on a logical relationship between the first search result and the second search result, based on the relationship information. The search result selected by the electronic device 1000 may be provided to the user.

FIG. 6 is a flowchart of a method, performed by an electronic device, of creating an index DB, according to an embodiment of the disclosure.

In operation S600, the electronic device 1000 obtains search target data. The search-target data is data that is related to the query sentence and is to be search-targeted, and may include, for example, data related to device settings, data related to a memo input by a user, and content created by the user. For example, the memo input by the user may include a text memo and a voice memo, and the content created by the user may include a photo and a video.

In operation S605, the electronic device 1000 preprocesses the search target data. The electronic device 1000 may preprocess the search target data into a format processable by the vector conversion module 1320. For example, when the search target data is text data, the electronic device 1000 may preprocess the search target data so that the search target data has the format of an input value of the language model-based vector encoder 1321. For example, when the search target data is audio data, the electronic device 1000 may extract text from the audio data by using automatic speech recognition (ASR), and may preprocess the extracted text so that the extracted text has the format of an input value of the language model-based vector encoder 1321. When the search target data is image data, the electronic device 1000 may extract text describing a situation indicated by an image from the image data by using an image analysis technique, and may preprocess the extracted text so that the extracted text has the format of an input value of the language model-based vector encoder 1321.

When the search target data is image data, the electronic device 1000 may preprocess the search target data so that the search target data has the format of an input value of the image model-based vector encoder 1322. For example, the electronic device 1000 may resize the image, which is the search target data, so that the size of the image is a pre-set size.

In operation S610, the electronic device 1000 generates the second embedding vector from the preprocessed search target data. When the preprocessed search target data is text data, the electronic device 1000 may obtain the second embedding vector output from the language model-based vector encoder 1321, by inputting the preprocessed text to the language model-based vector encoder 1321. When the preprocessed search target data is image data, the electronic device 1000 may obtain the second embedding vector output from the image model-based vector encoder 1322, by inputting the preprocessed image to the image model-based vector encoder 1322.

In operation S615, the electronic device 1000 extracts the metadata from the search target data. For example, the electronic device 1000 may extract metadata, such as a date, a place, and a file format, from the search target data.

In operation S620, the electronic device 1000 creates an index of the search target data. The electronic device 1000 may index the second embedding vector to the search target data. The second embedding vector created from the search target data may be associated with the search target data and stored in the index DB 1340. According to an embodiment of the disclosure, the electronic device 1000 may index the second embedding vector and the metadata to the search target data. The second embedding vector and the metadata may be associated with the search target data and stored in the index DB 1340.

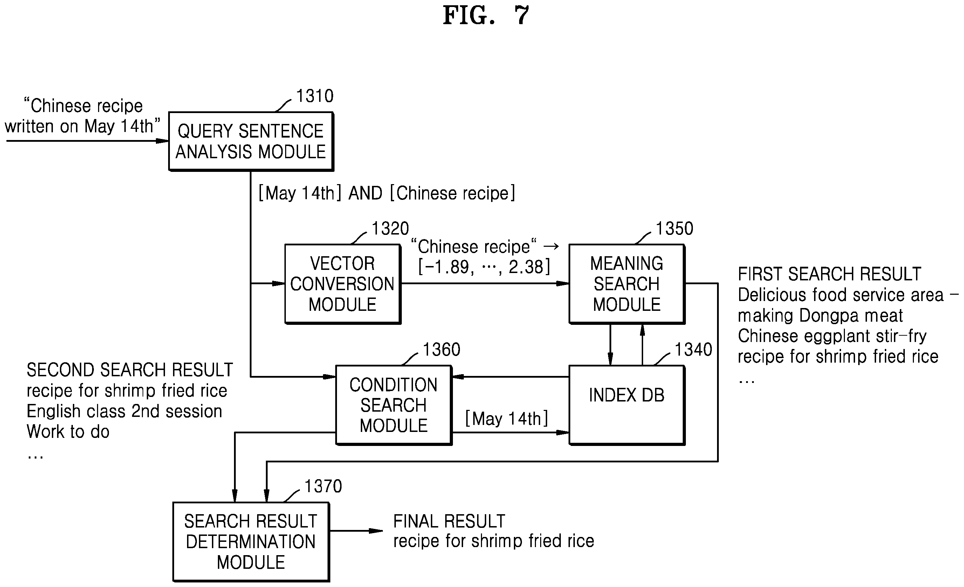

FIG. 7 is a schematic diagram illustrating a method, performed by an electronic device, of providing a search result related to a memo according to an embodiment of the disclosure.

Referring to FIG. 7, the electronic device 1000 may search for memo data related to a query sentence. For example, when the query sentence is "Chinese recipe written on May 14^{th}", the query sentence analysis module 1310 may analyze the query sentence to obtain logical representations such as "May 14^{th}", which is the conditional phrase, "Chinese recipe", which is the semantic phrase, and "AND", which is the relationship information between the conditional phrase and the semantic phrase.

The vector conversion module 1320 may receive the semantic phrase "Chinese recipe", and may convert "Chinese recipe" into [-1.89,...,2.38], which is the first embedding vector. The first embedding vector created by the vector conversion module 1320 may be provided to the meaning search module 1350.

The meaning search module 1350 may search for the second embedding vector similar to the first embedding vector from the index DB 1340, and may obtain the search target data corresponding to the found second embedding vector. For example, the meaning search module 1350 may obtain search target data such as "Delicious food service area - making Dongpa meat", "Chinese eggplant stir-fry", and "recipe for shrimp fried rice" as the search target data to which the second embedding vector similar to the first embedding vector [-1.89,... ,2.38] has been indexed, as the first search result.

The condition search module 1360 may receive the conditional phrase "May 14^{th}", search for metadata substantially the same as "May 14^{th}" from the index DB 1340, and obtain the search target data corresponding to the found metadata. For example, the condition search module 1360 may obtain search target data such as "shrimp fried rice recipe", "English class 2^{nd} session", and "work to do" as search target data having "May 14^{th}" as metadata as the second search result.

The search result determination module 1370 may receive the relationship information "AND", and may determine the intersection between the first search result and the second search result as a search result that is to be provided to the user. The search result determination module 1370 may determine, as a search result to be provided to the user, "shrimp fried rice recipe" commonly belonging to the first search result "Delicious food service area - making Dongpa meat", "Chinese eggplant stir-fry", and the second search result "shrimp fried rice recipe", "English Lesson 2^{nd} session", and "work to do".

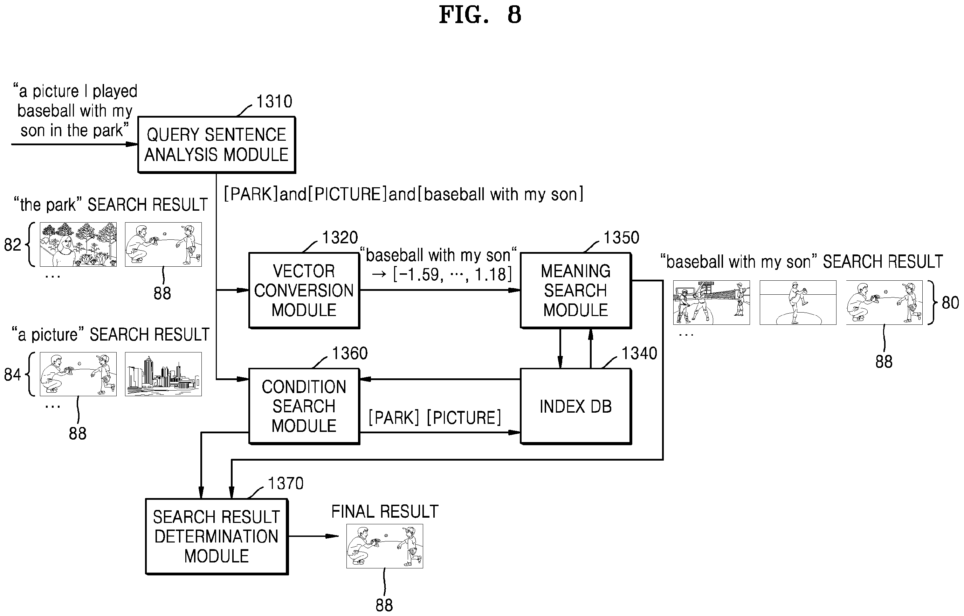

FIG. 8 is a schematic diagram illustrating a method, performed by an electronic device, of providing a search result related to a picture according to an embodiment of the disclosure.

Referring to FIG. 8, the electronic device 1000 may search for picture data related to the query sentence. For example, when the query sentence is "a picture I played baseball with my son in the park", the query sentence analysis module 1310 may analyze the query sentence to obtain logical representations such as conditional phrases "the Park" and "a picture", a semantic phrase "baseball with my son" and relationship information between the conditional phrases and the semantic phrase, "AND".

The vector conversion module 1320 may receive the semantic phrase "baseball with my son", and may convert "baseball with my son" into the first embedding vector [-1.59,...,1.18]. The first embedding vector created by the vector conversion module 1320 may be provided to the meaning search module 1350.

The meaning search module 1350 may search for the second embedding vector similar to the first embedding vector from the index DB 1340, and may obtain the search target data corresponding to the found second embedding vector. For example, the meaning search module 1350 may obtain pictures 80 to which the second embedding vector similar to the first embedding vector [-1.59,...,1.18] has been indexed, as the first search result.

The condition search module 1360 may receive the conditional phrase "the park" and search for a picture having "the park" as metadata, and the condition search module 1360 may receive the conditional phrase "a picture" and search for a picture having "a picture" as metadata from the index DB 1340. For example, the condition search module 1360 may obtain pictures 82 having "the park" as metadata and pictures 84 having "a picture" as metadata as the second search result.

The search result determination module 1370 may receive the relationship information "AND", and may determine the intersection between the first search result and the second search result as a search result that is to be provided to the user. For example, the search result determination module 1370 may determine a picture 88 commonly belonging to the pictures 80 as the first search result and the pictures 82 and 84 as the second search, as the search result that is to be provided to the user.

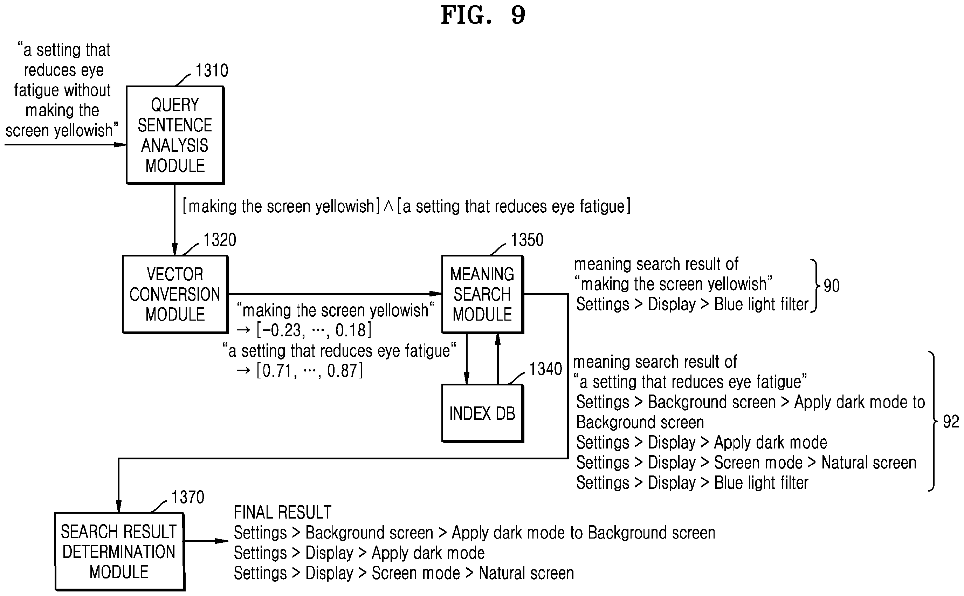

FIG. 9 is a schematic diagram illustrating a method, performed by an electronic device, of providing a search result related to mobile phone setting according to an embodiment of the disclosure.

Referring to FIG. 9, the electronic device 1000 may search for menu data of mobile phone setting related to a query sentence. For example, when the query sentence is "a setting that reduces eye fatigue without making the screen yellowish", the query sentence analysis module 1310 may analyze the query sentence to obtain logical representations such as semantic phrases "making the screen yellowish" and "a setting that reduces eye fatigue", relationship information between the semantic phrases "AND", and relationship information for the semantic phrase "making the screen yellowish", "NOT". In this case, the query sentence analysis module 1310 may create "making the screen yellowish", which is a negative semantic phrase for "without making the screen yellowish", and create "NOT", which is the relationship information for "making the screen yellowish", which is a semantic phrase.

The vector conversion module 1320 may receive the semantic phrase "making the screen yellowish" from the query sentence analysis module 1310, and convert the semantic phrase "making the screen yellowish" into a first embedding vector [-0.23,...,0.18]. The vector conversion module 1320 may receive the semantic phrase "a setting that reduces eye fatigue" from the query sentence analysis module 1310, and convert "a setting that reduces eye fatigue" into a first embedding vector [0.71,...,0.87]. The first embedding vectors created by the vector conversion module 1320 may be provided to the meaning search module 1350.

The meaning search module 1350 may search for the second embedding vector similar to the first embedding vector from the index DB 1340, and may obtain the search target data corresponding to the found second embedding vector. For example, the meaning search module 1350 may obtain "Settings > Display > Blue light filter", which is setting menu data 90 to which the second embedding vector similar to the first embedding vector [-0.23,...,0.18] has been indexed, as the first search result. The meaning search module 1350 may obtain "Settings > Backgroud screen > Apply dark mode to background screen", "Settings > Display > Apply dark mode", "Settings > Display > Screen mode > Natural screen", and "Settings > Display > Blue light filter", which are setting menu data 92 to which the second embedding vector similar to the first embedding vector [0.71,...,0.87] has been indexed, as the first search result.

The search result determination module 1370 may receive pieces of relationship information "NOT" and "AND", and may determine, as the search result to be provided to the user, "Settings > Backgroud screen > Apply dark mode to background screen", "Settings > Display > Apply dark mode", and "Settings > Display > Screen mode > Natural screen", which are pieces of data belonging to the setting menu data 92 to which the second embedding vector similar to the first embedding vector [0.71,...,0.87] has been indexed while not belonging to the setting menu data 90 to which the second embedding vector similar to the first embedding vector [-0.23,...,0.18] has been indexed.

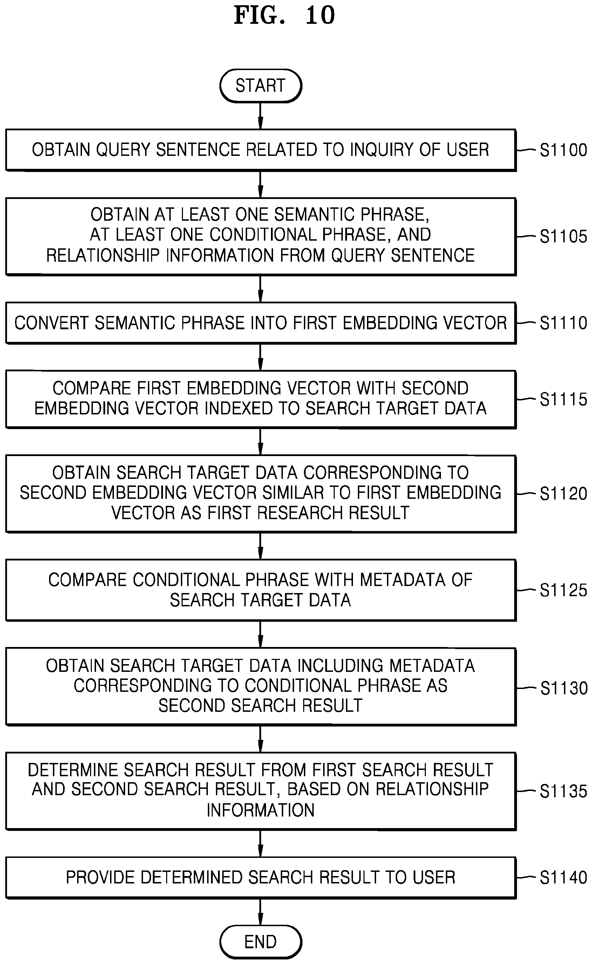

FIG. 10 is a flowchart of a method, performed by an electronic device, of determining a search result related to a query sentence, according to an embodiment of the disclosure.

Referring to FIG. 10, in operation S1100, the electronic device 1000 obtains a query sentence related to an inquiry of a user. When the electronic device 1000 is a device of the user, the electronic device 1000 may obtain a query sentence input by the user. In this case, the electronic device 1000 may obtain the query sentence, based on the text input by the user or text converted from a voice signal input by the user. When the electronic device 1000 is a server, the electronic device 1000 may receive the query sentence from the device of the user.

In operation S1105, the electronic device 1000 obtains at least one semantic phrase, at least one conditional phrase, and relationship information from the query sentence. The electronic device 1000 may parse the query sentence into meaning representations, based on semantic parsing. The electronic device 1000 may obtain at least one semantic phrase representing the meaning of the search related to the query sentence, at least one conditional phrase representing the condition of the search related to the query sentence, and relationship information representing a logical relationship between at least two of the at least one semantic phrase and the at least one conditional phrase.

In operation S1110, the electronic device 1000 converts the semantic phrase into the first embedding vector. The electronic device 1000 may convert the semantic phrases parsed from the query sentence into the first embedding vector. The electronic device 1000 may preprocess the semantic phrase into a format processable by the vector conversion module 1320 so that the semantic phrase parsed from the query sentence may be input to the vector conversion module 1320. The electronic device 1000 may preprocess the semantic phrase parsed from the query sentence, so that the semantic phrase parsed from the query sentence has the format of an input value of the language model-based vector encoder 1321. The electronic device 1000 may input the preprocessed semantic phrase to the vector conversion module 1320, and may obtain the first embedding vector output from the vector conversion module 1320.

In operation S1115, the electronic device 1000 compares the first embedding vector with the second embedding vector indexed to the search target data. The electronic device 1000 may search for the search target data corresponding to the second embedding vector similar to the first embedding vector. The electronic device 1000 may compare the first embedding vector created from the query sentence with the second embedding vector stored in the index DB 1340 to thereby search for the second embedding vector similar to the first embedding vector, based on cosine similarity between the first embedding vector and the second embedding vector.

In operation S1120, the electronic device 1000 obtains the search target data corresponding to the second embedding vector similar to the first embedding vector as the first research result.

In operation S1125, the electronic device 1000 compares the conditional phrase with the metadata of the search target data. The electronic device 1000 may search for the search target data having the metadata corresponding to the conditional phrase obtained from the query sentence. The electronic device 1000 may preprocess the conditional phrase parsed from the query sentence, into a format processable by the condition search module 1360. The electronic device 1000 may preprocess the conditional phrase parsed from the query sentence, so that the conditional phrase has the format of an input value of the condition search module 1360. The electronic device 1000 may input the preprocessed conditional phrase to the condition search module 1360.

In operation S1130, the electronic device 1000 obtains the search target data including the metadata corresponding to the conditional phrase as the second search result. The condition search module 1360 of the electronic device 1000 may obtain the search target data having the metadata corresponding to the conditional phrase as the second search result, by comparing the preprocessed conditional phrase with metadata of the search target data.

In operation S1135, the electronic device 1000 determines the search result from the first search result and the second search result, based on the relationship information. The electronic device 1000 may select the search result that is to be provided to the user, from the first search result and the second search result, based on the relationship information obtained from the query sentence.

In operation S1140, the electronic apparatus 1000 may provide the determined search result to the user. When the electronic device 1000 is the device of the user, the electronic device 1000 may display the determined search result on a screen of the electronic device 1000. Alternatively, when the electronic device 1000 is a server, the electronic device 1000 may transmit the determined search result to the device of the user.

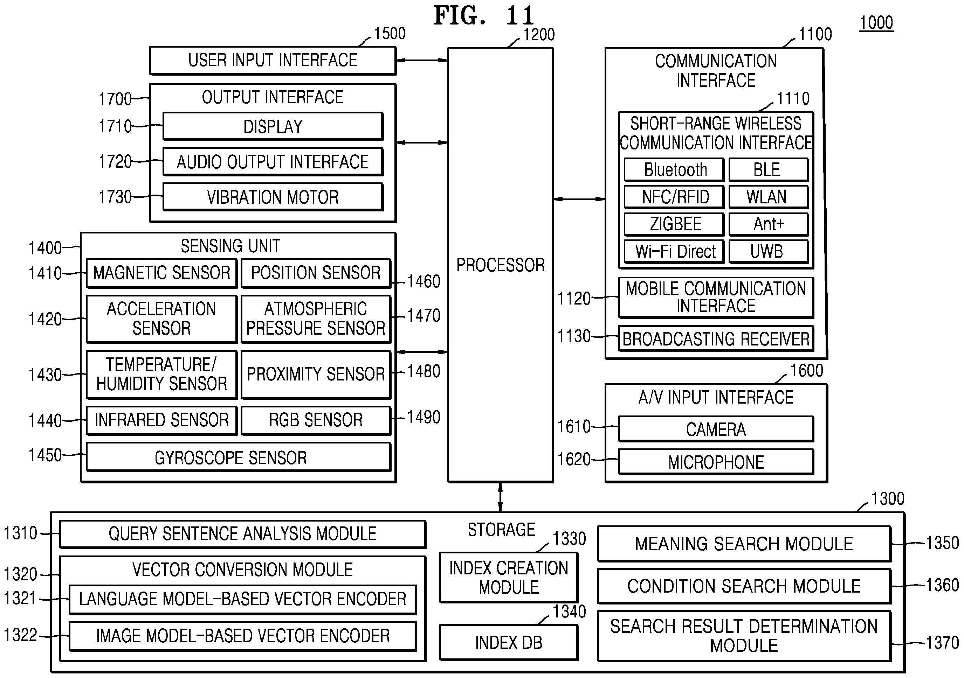

FIG. 11 is a block diagram of an electronic device according to an embodiment of the disclosure.

Referring to FIG. 11, the electronic device 1000 may be a device of a user, such as a mobile device.

The electronic device 1000 according to an embodiment of the disclosure may include a communication interface 1100, a processor 1200, and a storage 1300. The electronic device 1000 may further include a sensing unit 1400, a user input interface 1500, an audio/video (A/V) input interface 1600, and an output interface 1700.

The user input interface 1500 denotes a unit via which a user inputs data for controlling the electronic device 1000. For example, the user input interface 1500 may be, but is not limited to, a key pad, a dome switch, a touch pad (e.g., a capacitive overlay type, a resistive overlay type, an infrared beam type, an integral strain gauge type, a surface acoustic wave type, a piezo electric type, or the like), a jog wheel, or a jog switch.

The user input interface 1500 may receive a user input for providing a search result related to a query sentence to the user.

The output interface 1700 may output at least one of an audio signal, a video signal, or a vibration signal, and may include at least one of a display 1710, an audio output interface 1720, or a vibration motor 1730.

The display 1710 displays information that is processed by the electronic device 1000. For example, the display 1710 may display a user interface for providing the search result related to the query sentence.

When the display 1710 forms a layer structure together with a touch pad to construct a touch screen, the display 1710 may be used as an input device as well as an output device. The display 1710 may include at least one of a liquid crystal display (LCD), a thin film transistor-liquid crystal display (TFT-LCD), an organic light-emitting diode (OLED), a flexible display, a three-dimensional (3D) display, or an electrophoretic display. According to embodiments of disclosure, the electronic device 1000 may include at least two displays 1710. The at least two displays 1710 may be disposed to face each other by using a hinge.

The audio output interface 1720 outputs audio data that is received from the communication interface 1100 or stored in the storage 1300. The audio output interface 1720 also outputs an audio signal (e.g., a call signal receiving sound, a message receiving sound, or a notification sound) related with a function of the electronic device 1000. The audio output interface 1720 may include, for example, a speaker and a buzzer.

The vibration motor 1730 may output a vibration signal. For example, the vibration motor 1230 may output a vibration signal (e.g., a call signal receiving sound or a message receiving sound) corresponding to an output of audio data or video data. The vibration motor 1730 may also output a vibration signal when a touch screen is touched.

The processor 1200 typically controls all operations of the electronic device 1000. For example, the processor 1200 may control the communication interface 1100, the storage 1300, the sensing unit 1400, the user input interface 1500, the A/V input interface 1600, and the output interface 1700 by executing programs stored in the storage 1300.

Referring to FIG. 2, the processor 1200 may provide the search result related to the query sentence to the user by executing the query sentence analysis module 1310, the vector conversion module 1320, the index creation module 1330, the index DB 1340, the meaning search module 1350, the condition search module 1360, and the search result determination module 1370.

The sensing unit 1400 may sense a state of the electronic device 1000 or a state of the surrounding of the electronic device 1000 and may transmit information corresponding to the sensed state to the processor 1200.

The sensing unit 1400 may include, but is not limited thereto, at least one of a magnetic sensor 1410, an acceleration sensor 1420, a temperature/humidity sensor 1430, an infrared sensor 1440, a gyroscope sensor 1450, a position sensor (e.g., a global positioning system (GPS)) 1460, a pressure sensor 1470, a proximity sensor 1480, or an RGB sensor 1490 (i.e., an illumination sensor). Functions of most of the sensors would be instinctively understood by one of ordinary skill in the art in view of their names and thus detailed descriptions thereof will be omitted herein.

The communication interface 1100 transmits/receives the data for query sentence search to/from an external device (not shown). The communication interface 1100 may include at least one component that enables communication between the electronic device 1000 and an external device (not shown). For example, the communication interface 1100 may include at least one of a short-range wireless communication interface 1110, a mobile communication interface 1120, or a broadcasting receiver 1130.

The A/V input interface 1600 inputs an audio signal or a video signal, and may include at least one of a camera 1610, or a microphone 1620. The camera 1610 may acquire an image frame, such as a still image or a moving picture, via an image sensor. An image captured via the image sensor may be processed by at least one of the processor 1200, or a separate image processor (not shown).

The image frame obtained by the camera 1610 may be stored in the storage 1300 or transmitted to the outside via the communication interface 1100. At least two cameras 1610 may be included according to embodiments of the structure of a terminal. An image captured by the camera 1620 may be used to create a query sentence or may be used as a search target image.

The microphone 1620 receives an external audio signal and processes the external audio signal into electrical audio data. The processing the external audio signal into electrical audio data may be expressed as converting the external audio signal into electrical audio data. For example, the microphone 1620 may receive an audio signal from an external device or a speaking person. The microphone 1620 may use various noise removal algorithms in order to remove noise that is generated while receiving the external audio signal. A user voice obtained by the microphone 1620 may be used to create a query sentence.

The storage 1300 may store a program used by the processor 1200 to perform processing and control, and may also store data that is input to or output from the electronic device 1000.

The storage 1300 may include at least one of an internal memory (not shown), or an external memory (not shown). The internal memory may include, at least one of volatile memory (e.g., dynamic RAM (DRAM), static RAM (SRAM), or synchronous dynamic RAM (SDRAM), etc.), non-volatile memory (e.g., one time programmable ROM (OTPROM), programmable ROM (PROM), erasable and programmable ROM (EPROM), electrically erasable and programmable ROM (EEPROM), mask ROM, or flash ROM, etc.), a hard disk drive (HDD), or a solid state drive (SSD). According to an embodiment of the disclosure, the processor 1200 may load a command or data received from at least one of the non-volatile memory or another element into the volatile memory and process the command or the data. The processor 1200 may store data received or generated from another element in the non-volatile memory. The external memory may include, for example, at least one of Compact Flash (CF), Secure Digital (SD), Micro-SD, Mini-SD, extreme Digital (xD), or Memory Stick.

The programs stored in the storage 1300 may be classified into a plurality of modules according to their functions. For example, the programs stored in the storage 1300 may be classified into the query sentence analysis module 1310, the vector conversion module 1320, the index creation module 1330, the index DB 1340, the meaning search module 1350, the condition search module 1360, and the search result determination module 1370.

The programs stored in the storage 1300 may be classified into, for example, a user interface (UI) module (not shown), a touch screen module (not shown), and a notification module (not shown). The UI module may provide a UI, a graphical user interface (GUI), or the like that is specialized for each application and interoperates with the electronic device 1000. The touch screen module may detect a touch gesture on a touch screen of a user and transmit information regarding the touch gesture to the processor 1200. The touch screen module according to an embodiment may recognize and analyze a touch code. The touch screen module may be configured by separate hardware including a controller. The notification module may generate a signal for notifying that an event has been generated in the electronic device 1000. Examples of the event generated in the electronic device 1000 may include call signal receiving, message receiving, a key signal input, schedule notification, and the like.

An embodiment of the disclosure may also be implemented in the form of a recording medium including instructions executable by a computer, such as a program module executed by a computer. A computer readable medium can be any available medium which can be accessed by the computer and includes all volatile/non-volatile and removable/non-removable media. Computer-readable media may also include computer storage media and communication media. Computer storage media includes both volatile and nonvolatile, removable and non-removable media implemented in any method or technology for storage of information such as computer readable instructions, data structures, program modules or other data. Communication media may typically include computer readable instructions, data structures, or other data in a modulated data signal, such as program modules.

In addition, computer-readable storage media may be provided in the form of non-transitory storage media. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory storage medium may include a buffer in which data is temporarily stored.

According to an embodiment of the disclosure, a method according to various disclosed embodiments may be provided by being included in a computer program product. Computer program products are commodities and thus may be traded between sellers and buyers. Computer program products are distributed in the form of device-readable storage media (e.g., compact disc read only memory (CD-ROM)), or may be distributed (e.g., downloaded or uploaded) through an application store (e.g., Play Store^{™}) or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

A term "unit" used herein may be a hardware component such as a processor or circuit, and/or a software component executed by a hardware component such as a processor.

Herein, the expression "at least one of a, b or c" indicates only a, only b, only c, both a and b, both a and c, both b and c, all of a, b, and c, or variations thereof.

Functions related to AI according to the disclosure are operated through a processor and a memory. The processor may include one or a plurality of processors. The one or plurality of processors may be a general-purpose processor such as a CPU, an AP, or a Digital Signal Processor (DSP), a graphics-only processor such as a GPU or a Vision Processing Unit (VPU), or an AI-only processor such as an NPU. The one or plurality of processors control to process input data, according to a predefined operation rule or AI model stored in the memory. Alternatively, when the one or plurality of processors are AI-only processors, the AI-only processors may be designed in a hardware structure specialized for processing a specific AI model.

The predefined operation rule or AI model is characterized in that it is created through learning. Here, being made through learning means that a basic AI model is learned using a plurality of learning data by a learning algorithm, so that a predefined operation rule or AI model set to perform desired characteristics (or a purpose) is created. Such learning may be performed in a device itself on which AI according to the disclosure is performed, or may be performed through a separate server and/or system. Examples of the learning algorithm include, but are not limited to, supervised learning, unsupervised learning, semi-supervised learning, or reinforcement learning.

The AI model may be composed of a plurality of neural network layers. Each of the plurality of neural network layers has a plurality of weight values, and performs a neural network operation through an operation between an operation result of a previous layer and the plurality of weight values. The plurality of weight values of the plurality of neural network layers may be optimized by the learning result of the AI model. For example, a plurality of weight values may be updated so that a loss value or a cost value obtained from the AI model is reduced or minimized during a learning process. The artificial neural network may include a deep neural network (DNN), for example, a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), or a Deep Q-Networks, but embodiments of the disclosure are not limited thereto.

The electronic device 1000 according to an embodiment of the disclosure may receive a speech signal, which is an analog signal, through a microphone, and convert the speech signal into computer-readable text by using an ASR model to thereby obtain a query sentence. The electronic device 1000 may also obtain a user's utterance intention by interpreting the converted text using a Natural Language Understanding (NLU) model. The ASR model or the NLU model may be an AI model. The AI model may be processed by an AI-only processor designed with a hardware structure specialized for processing the AI model. The AI model may be created through learning. Here, being made through learning means that a basic AI model is learned using a plurality of learning data by a learning algorithm, so that a predefined operation rule or AI model set to perform desired characteristics (or a purpose) is created. The AI model may be composed of a plurality of neural network layers. Each of the plurality of neural network layers has a plurality of weight values, and performs a neural network operation through an operation between an operation result of a previous layer and the plurality of weight values. Linguistic understanding is a technology that recognizes and applies/processes human language/character, and thus includes natural language processing, machine translation, a dialog system, question answering, and speech recognition/speech recognition/synthesis, etc.

The electronic device 1000 according to embodiments of the disclosure may obtain output data by recognizing an image or an object in the image by using image data as input data of the AI model. The AI model may be created through learning. Here, being made through learning means that a basic AI model is learned using a plurality of learning data by a learning algorithm, so that a predefined operation rule or AI model set to perform desired characteristics (or a purpose) is created. The AI model may be composed of a plurality of neural network layers. Each of the plurality of neural network layers has a plurality of weight values, and performs a neural network operation through an operation between an operation result of a previous layer and the plurality of weight values. Visual understanding is a technique of recognizing and processing an object like in human vision, and includes object recognition, object tracking, image retrieval, human recognition, scene recognition, 3D reconstruction/localization, image enhancement, and the like.

The operation of obtaining the search target data corresponding to the second embedding vector by the electronic device 1000 according to embodiments of the disclosure may comprise obtaining a cosine similarity between the first embedding vector and the second embedding vector, and obtaining the search target data based on the cosine similarity being greater than or equal to the predetermined value.

The search target data according to embodiments of the disclosure may comprise at least one of data related to device settings, data related to a memo input by a user, audio data, image data, and user-created content.

While the disclosure has been particularly shown and described with reference to embodiments thereof, it will be understood that various changes in form and details may be made therein without departing from the spirit and scope of the disclosure. Thus, the above-described embodiments should be considered in descriptive sense only and not for purposes of limitation. For example, each component described as a single type may be implemented in a distributed manner, and similarly, components described as being distributed may be implemented in a combined form.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method, performed by an electronic device(1000), of providing a search result related to a query sentence, the method comprising:
Obtaining (S500:S 1100) a query sentence related to an inquiry of a user;
Obtaining (S1105), by parsing the query sentence, at least one semantic phrase for a meaning of a search related to the query sentence, at least one conditional phrase for the condition of the search related to the query sentence, and relationship information between at least two of the at least one semantic phrase and the at least one conditional phrase;
converting (S1110) the at least one semantic phrase into at least one first embedding vector;
comparing (S1115) the at least one first embedding vector with a second embedding vector indexed to search target data stored in the electronic device (1000);
obtaining (S1120), as a first search result, search target data corresponding to the second embedding vector similar to the first embedding vector by a predetermined threshold value or greater, based on a result of the comparing of the at least one first embedding vector with the second embedding vector;
comparing (S1125) the at least one conditional phrase with metadata of the search target data stored in the electronic device;
obtaining (S1130), as a second search result, search target data including metadata corresponding to the at least one conditional phrase, based on a result of the comparing of the at least one conditional phrase with the metadata;
determining (S1135), based on the relationship information, a search result to be provided to the user from the first search result and the second search result; and
providing (S1140)the determined search result to the user.

2. The method of claim 1, wherein the query sentence is parsed into meaning representations, based on semantic parsing.

3. The method of any one of the preceding claims, wherein the converting into the at least one first embedding vector comprises:
inputting the at least one semantic phrase to a language model-based vector encoder (1321); and
obtaining the at least one first embedding vector corresponding to the inputted at least one semantic phrase.

4. The method of any one of the preceding claims, wherein the language model-based vector encoder (1321) comprises a language model trained to output a similar embedding vector for a similar input phrase.

5. The method of any one of the preceding claims,
wherein the search target data stored in the electronic device (1000) comprises text data,
wherein the text data is input to the language model-based vector encoder (1321) so that the second embedding vector is output by the language model-based vector encoder (1321), and the output second embedding vector corresponds to the text data, and
wherein the output second embedding vector is associated with the text data and previously stored in the electronic device.

6. The method of any one of the preceding claims,
wherein the search target data stored in the electronic device (1000) comprises image data,
wherein the image data is input to an image model-based vector encoder (1322) so that the second embedding vector is output by the image model-based vector encoder (1322), and
wherein the output second embedding vector is associated with the image data and stored in the electronic device (1000).

7. The method of any one of the preceding claims, wherein the image model-based vector encoder (1322) comprises an image model trained to output the second embedding vector representing the image data.

8. The method of any one of the preceding claims, wherein the relationship information represents at least one of:
a relationship between a semantic phrase and a semantic phrase, or
a relationship between a semantic phrase and a conditional phrase.

9. The method of any one of the preceding claims, wherein the determining of the search result comprises determining the search result, based on an intersection between the first search result and the second search result.

10. The method of any one of the preceding claims, wherein the determined search result is determined by excluding a search result included in the first search result from the second search result.

11. An electronic device (1000) for providing a search result related to a query sentence, the electronic device comprising:
a communication interface (1100);
a memory (1300) storing instructions for a search related to the query sentence; and
a processor (1200) configured to:
obtain the query sentence related to an inquiry of a user,
obtain, by parsing the query sentence, at least one semantic phrase for a meaning of a search related to the query sentence, at least one conditional phrase for the condition of the search related to the query sentence, and relationship information between at least two of the at least one semantic phrase and the at least one conditional phrase,
convert the at least one semantic phrase into at least one first embedding vector,
compare the at least one first embedding vector with a second embedding vector indexed to search target data stored in the electronic device,
obtain, as a first search result, search target data corresponding to the second embedding vector similar to the first embedding vector by a predetermined threshold value or greater, based on a result of the comparison of the at least one first embedding vector with the second embedding vector,
compare the at least one conditional phrase with metadata of the search target data stored in the electronic device,
obtain, as a second search result, search target data including metadata corresponding to the at least one conditional phrase, based on a result of the comparison of the at least one conditional phrase with the metadata,
determine, based on the relationship information, a search result that is to be provided to the user from the first search result and the second search result, and
provide the determined search result to the user.

12. The electronic device (1000) of claim 11, wherein the query sentence is parsed into meaning representations, based on semantic parsing.

13. The electronic device (1000) of any one of the preceding claims, wherein the processor (1200) is further configured to:
input the at least one semantic phrase to a language model-based vector encoder (1321); and
obtain the at least one first embedding vector corresponding to the inputted at least one semantic phrase,
wherein the language model-based vector encoder (1321) comprises a language model trained to output a similar embedding vector for a similar input phrase,
wherein the search target data stored in the electronic device (1000) comprises text data,
wherein the text data is input to the language model-based vector encoder (1321) so that the second embedding vector is output by the language model-based vector encoder (1321), and the output second embedding vector corresponds to the text data, and
wherein the output second embedding vector is associated with the text data and previously stored in the electronic device (1000).

14. The electronic device (1000) of any one of the preceding claims,
wherein the search target data stored in the electronic device (1000) comprises image data,
wherein the image data is input to an image model-based vector encoder (1322) so that the second embedding vector is output by the image model-based vector encoder, and
wherein the output second embedding vector is associated with the image data and stored in the electronic device,
wherein the image model-based vector encoder (1322) comprises an image model trained to output the second embedding vector representing the image data,
wherein the relationship information represents at least one of:
a relationship between a semantic phrase and a semantic phrase, or
a relationship between a semantic phrase and a conditional phrase,
wherein the processor (1200) is further configured to determine the search result, based on an intersection between the first search result and the second search result.

15. A computer-readable recording medium having recorded thereon a program, which, when executed by a computer, performs the method of claim 1.
